Europäisches Patentamt

European Patent Office

Office européen des brevets

(11) Numéro de publication: **0 201 093 B1**

# FASCICULE DE BREVET EUROPEEN

(45) Date de publication de fascicule du brevet:
**10.07.91**

(51) Int. Cl.⁵: **G11B 23/36**, G11B 7/09, G11B 27/28, //G11B7/007

(21) Numéro de dépôt: **86106229.7**

(22) Date de dépôt: **06.05.86**

(54) **Support d'information à prégravure et son dispositif de lecture optique.**

(30) Priorité: **10.05.85 FR 8507131**

(43) Date de publication de la demande:
**17.12.86 Bulletin 86/46**

(45) Mention de la délivrance du brevet:
**10.07.91 Bulletin 91/28**

(84) Etats contractants désignés:
**DE GB IT NL SE**

(56) Documents cités:
EP-A- 0 064 897  EP-A- 0 089 274
EP-A- 0 089 734  DE-A- 3 225 809
GB-A- 2 067 313  GB-A- 2 109 150
US-A- 4 455 632  US-A- 4 486 791

(73) Titulaire: **THOMSON S.A.**
**173, bld Haussmann**
**F-75008 Paris(FR)**

(72) Inventeur: **Romeas, René**
**23, rue du Hamau des Jonchettes**
**F-91120 Palaseau(FR)**

(74) Mandataire: **Grynwald, Albert et al**
**THOMSON-CSF SCPI**
**F-92045 PARIS LA DEFENSE CEDEX 67(FR)**

## Description

La présente invention se rapporte aux mémoires optiques destinées à l'emmagasinage de données dans des plages réservées de la surface d'un support d'information. Pour permettre un accès aisé et rapide aux plages de données, ce type de support d'information peut se présenter sous la forme d'un disque dont la surface de référence est décomposée en éléments de piste régulièrement espacés. Ces éléments de piste épousent par exemple le tracé des spires d'une spirale à pas constant ayant un centre confondu avec celui d'un orifice de centrage. L'agencement des plages de données répond également à une division angulaire en secteurs, qui eux mêmes sont subdivisés en blocs pour contenir les données et les adresses indispensables à la désignation des éléments de piste et des secteurs. Grâce à cette répartition radiale et angulaire, on peut gérer la transcription des données de façon particulièrement souple avec une tête d'enregistrement-lecture que l'on déplace radialement en vis à vis de la surface de référence du disque, soit pour suivre régulièrement un élément de piste, soit pour franchir rapidement par saut la distance séparant deux éléments de piste quelconques. Le choix du secteur ou du bloc de données est lié à la rotation du disque, laquelle est en général assez rapide pour permettre un débit d'information élevé. Pour matérialiser les éléments de piste et les portions de ceux-ci qui sont allouées au stockage des données, la surface de référence du disque est jalonnée de repères prégravés que l'on intercale entre les plages de données. La répétition de proche en proche de ces repères permet d'astreindre un spot lumineux à se centrer exactement sur l'axe de la piste en dépis des défauts d'excentricité du disque. Certains repères sont formés de motifs de prégravure spécialement destinés au recalage d'une horloge qui gradue l'agencement en série des données et des autres repères explorés par le spot lumineux.

La surface de référence d'une mémoire optique présente à l'emplacement des motifs de prégravure un changement de caractéristique optique qui est analysé par un spot lumineux de grande finesse. L'exploration optique du disque assure ainsi la détection des erreurs de suivi de piste et des pertes de synchronisme qu'il faut compenser. D'autres modifications de caractéristiques optiques sont produites par l'inscription des données, mais des mesures sont prises pour que cette écriture ou postgravure n'affecte pas les motifs de prégravure nécessaires au suivi de piste et à la synchronisation d'horloge.

L'utilisation d'une mémoire optique telle qu'un disque optique prégravé nécessite la mise en oeuvre d'un dispositif de lecture optique qui comporte des moyens de projection d'un spot lumineux le plus fin possible dans la surface de référence du disque, des moyens de déplacement radial de ce spot, des moyens photodétecteurs pour analyser le rayonnement qui a interagi optiquement et qui émerge de la zone éclairée de la surface de référence et des moyens permettant de communiquer au disque un mouvement de rotation. Dans le cas d'un disque optique à haute densité d'information, il est indispensable de prévoir l'asservissement radial du spot et sa focalisation automatique.

Enfin, pour inscrire l'information sur le disque, il est nécessaire de moduler l'intensité du spot lumineux, afin d'induire dans les plages de données les modifications de caractéristiques optiques indélébiles ou effacables qui représentent l'information utile.

Dans le cas de disques optiques ayant un pas de piste voisin de deux microns, la lecture avec un spot de diamètre voisin du micron permet d'utiliser la technique de suivi de piste par échantillonnage de motifs de prégravure excentrés par rapport à l'axe de la piste. Le circuit qui réalise l'asservissement radial du spot est conçu pour comparer deux échantillons de signal détecté qui correspondent à une paire de motifs excentrés. La disposition adoptée est telle que le décalage radial du second motif exploré par rapport au premier conserve le même sens dans chaque paire rencontrée.

Si la subdivision angulaire du disque en blocs et secteurs a lieu selon des rayons, les motifs excentrés sont alignés radialement avec un pas qui correspond au pas des éléments de piste. Pour augmenter la densité d'information sur un disque optique, on est amené à diminuer le pas de piste. On peut resserrer le pas de la piste nettement en deça de la valeur indiquée ci-dessus, tout en conservant une lecture correcte des données, mais la détection d'une erreur de suivi de piste soulève des difficultés.

Le manque de résolution constaté dans la direction radiale est imputable au rapprochement des motifs de prégravure, car l'excentrement de ces motifs rend possible leur chevauchement par le spot lumineux de lecture.

En vue de pallier cet inconvénient, la présente invention propose d'inverser d'une révolution ou d'une fraction de révolution à la suivante, l'ordre des décalages des motifs de prégravure. Lors de la lecture d'un disque ainsi modifié, l'inversion d'ordre peut être prise en compte par un circuit de commutation approprié.

La présente invention a pour objet un support d'information comportant dans une surface de référence des éléments de piste adjacents matérialisés par des motifs de prégravure; lesdits éléments définissant des lignes d'exploration équidistantes et lesdits motifs définissant des choîtes orthogonales

qui segmentent les éléments de pistes en potions égales et forment des intersections à chacune desquelles est attaché au moins l'un desdits motifs; lesdits motifs présentent des déports égaux et de signes contraires alterne's d'un motif à l'autre par rapport auxdites lignes d'exploration de manière à former le long de chacune d'elles au moins une suite périodique de motifs alternativement décalés caractérisé en ce que les motifs alignés orthogonalement sont symétriques par rapport au lignes médianes comprises entre deux lignes d'exploration immédiatement adjacentes et sont séparés par des distances alternativement réduites et accrues.

L'invention concerne aussi le dispositif de lecture optique d'un support d'information ayant l'agencement de motifs de prégravure mentionné ci-dessus, car la boucle qui réalise le suivi radial d'un élément de piste doit ccmporter au moins un moyen permutateur actionné par la commande de saut de piste.

L'invention a donc également pour objet un dispositif de lecture d'un support d'information comportant des moyens de détection optique d'un rayonnement de lecture ayant interagi avec ledit support dans la partie de sa surface de référence éclairée par un spot de lecture, des moyens permettant de déplacer ledit spot transversalement par rapport à des éléments de piste adjacents dans ladite surface de référence et des moyens d'asservissement à échantillonnage permettant d'astreindre ledit spot à suivre les lignes d'exploration desdits éléments de piste grâce à l'exploration de motifs de prégravure en forme d'îlôts espacés qui servent à matérialiser lesdits éléments de piste, caractérisé en ce qu'auxdits moyens d'asservissement à échantillonage sont associés des moyens permutateurs actionnés au moins à chaque saut de piste égal à un nombre impair de pas d'éléments de piste.

L'invention sera mieux comprise au moyen de la description qui va suivre et des figures annexées, parmi lesquelles:

La figure 1 repésente un agencement de motifs de prégravure de type connu avec illustration du signal de lecture associé.

La figure 2 est une figure explicative.

La figure 3 représente un agencement de motifs de prégravure selon l'invention.

La figure 4 est une figure explicative.

La figure 5 représente une variante de réalisation de l'invention.

La figure 6 représente une autre variante de réalisation dans laquelle les motifs sont également prévus pour le recalage en phase d'une horloge.

La figure 7 illustre une forme de motif plus compacte qu'à la figure 6.

La figure 8 donne un exemple d'entête de secteur pour disque optique prégravé.

La figure 9 est schéma de dispositif de lecture conforme à l'invention.

La figure 10 est le schéma d'une variante de réalisation du dispositif de lecture selon l'invention.

La figure 11 est une figure explicative.

Dans la description qui va suivre, on a choisi comme exemple de support d'information un disque optique, bien que l'invention puisse aussi bien s'appliquer à d'autres formes de supports tels qu'une carte, une bande ou un cylindre.

Bien que l'expression "prégravure" suggère que la surface de référence du support d'information comporte des motifs corespondant à des irrégularités de surface, l'invention s'applique à des motifs qui se distinguent de la surface environnante par un changement de caractéristique optique tel que le pouvoir réflecteur, sans qu'il soit nécessaire de mettre en jeu des irrégularités de surface. La prégravure peut être obtenue par un procédé de copie par contact d'une matrice comportant un relief de surface approprié, mais elle peut également résulter de l'interaction optique entre un faisceau d'écriture et la surface initialement vierge d'un support d'information. Il s'agit donc d'un enregistrement préalable indispensable pour matérialiser des éléments de piste à suivre.

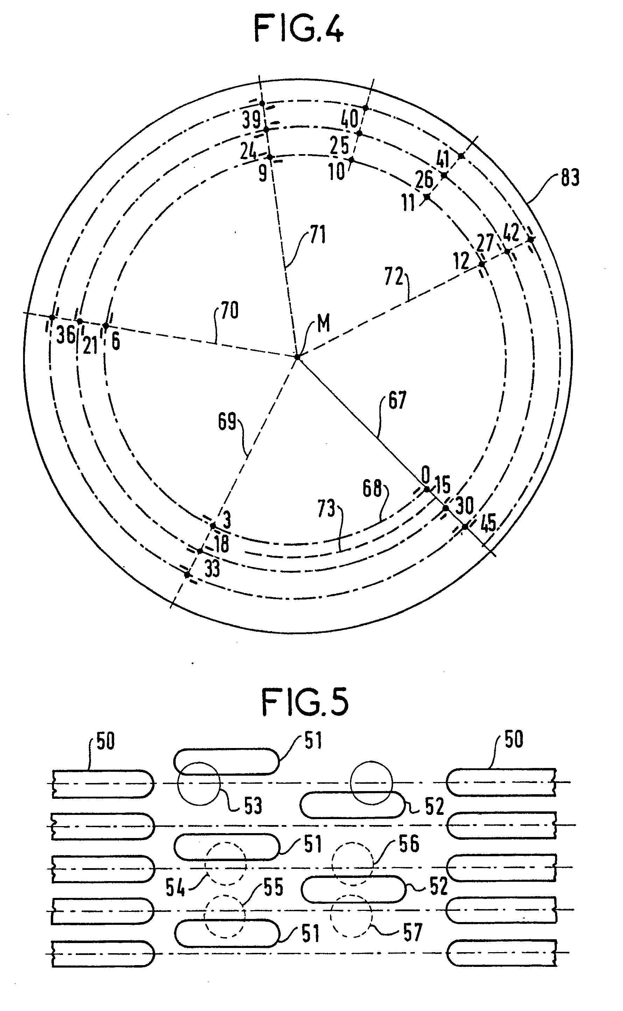

La répartition des données à emmagasiner dans la surface de référence d'un disque optique répond au schéma de la figure 4, où l'on a repésenté un disque 83 vu de face. La surface de référence est subdivisée angulairement en plages sectorales par des droites 67, 69, 70, 71 et 72, c'est à dire des rayons qui partent du centre M. Comme illustré à la figure 4, le secteur compris entre les rayons 71 et 72 est encore subdivisé en parties égales afin, d'y loger des blocs de données. Dans l'exemple choisi, le nombre de secteurs est impair ainsi que le nombre de blocs par secteur, ce qui conduit à un nombre impair de blocs pour une révolution complète du disque. Dans certains cas, on peut naturellement choisir un nombre pair de blocs par révolution. On sait par ailleurs que sur un disque optique les données sont logées le long d'une piste. Sur la figure 4, cette piste est représentée par sa ligne d'exploration 68 en trait mixte, qui, à titre d'exemple non limitatif, épouse la forme d'une spirale à pas régulier de centre M. La piste est donc formée d'un réseau d'éléments équidistants représentant chacun une spire complète. Trois spires sont représentées à la figure 4 commençant et finissant au rayon de référence 67. Pour illustrer la succession des blocs de données le long de la piste, on a gradué son axe à hauteur de l'entête de chaque bloc avec les nombres de 0 à 45. Entre deux éléments de piste consécutifs, il existe un interpiste esquissé sur la figure 4 par son axe en pointillé 73. Entre deux graduations, telles que 9 et 10, s'étend une plage de données. Une autre plage de donnée homologue de la première s'étend entre les graduations 24 et 25.

Une plage de données adjacente à la première est par exemple celle qui s'étend entre deux autres graduations de la même spire. Les plages de données sont en fait des plages intercalaires qui ne sont jointives ni radialement ni axialement, car au droit de chaque graduation est prévue une plage spécifique qui renferme des motifs de prégravure destinés à matérialiser la piste.

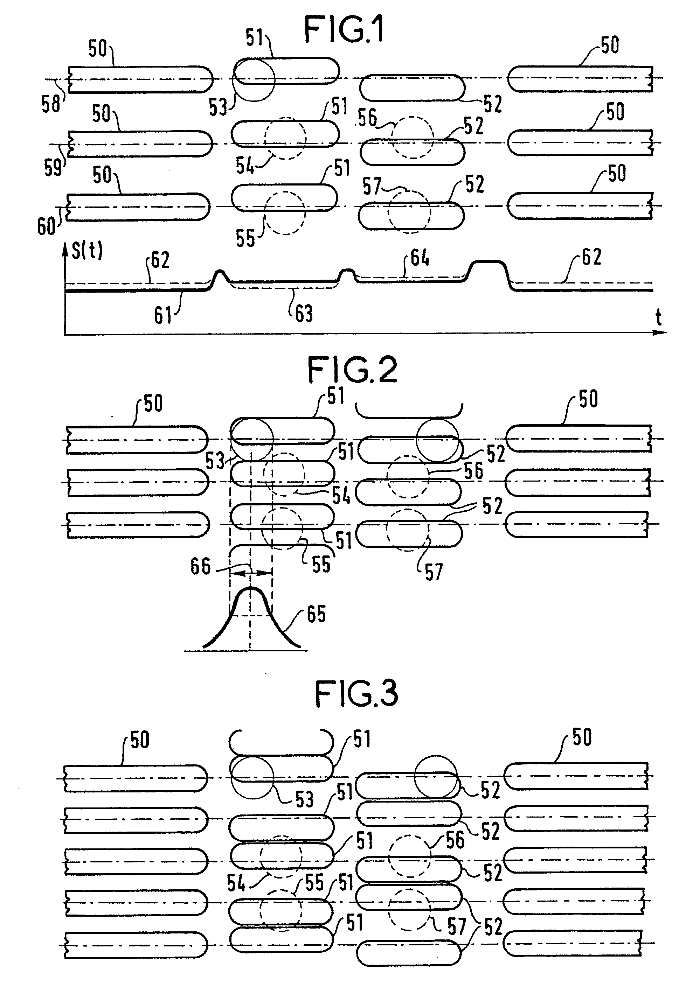

La figure 1 est une vue en plan partielle du contenu d'une plage spécifique. On a représenté les lignes d'exploration 58, 59 et 60 de trois spires sucessives avec centrées sur chacune d'elles, à gauche et à droite, les terminaisons 50 des plages de données qui l'encadrent. Les terminaisons 50 se présentent par exemple sous la forme de motifs de prégravure en forme de sillons qui sont interrompus par la plage spécifique. On suppose dans l'exemple de la figure 1 que l'élément de piste est plus étroit que l'interpiste, de sorte que lors d'une lecture optique avec le spot 53, la piste parait plus sombre que l'interpiste vu qu'elle diffracte davantage la lumière. Les droites 67, 69, 70, 71 et 72 sont orthogonales au réseau de lignes d'exploration équidistantes.

Au milieu de la figure 1 on peut voir les motifs de prégravure 51 et 52 grâce auxquels on peut déterminer l'erreur de suivi du spot par rapport à l'axe de la piste. Ces motifs associés à d'autres motifs non représentés forment l'entête d'un secteur ou d'un bloc de données.

Les motifs 51 et 52 sont également excentrés par rapport à l'axe de la piste de sorte que leurs interactions avec un spot centré 53 soit égales. A la partie inférieure de la figure 1, on a représenté en fonction du temps t le signal de lecture S(t) délivré par un photocapteur qui recueille le rayonnement résultat de l'interaction de l'aire du motif avec celle du spot de lecture. La courbe en trait plein 61 se rapporte à un spot explorant la piste sans erreur de suivi.

On observe une remontée du signal S(t) chaque fois que la partie du spot qui éclaire l'entourage des motifs s'accroit. Le niveau détecté est donc plus élevé lors de l'exploration des motifs 51 et 52, car ils sont excentrés et il devient encore plus élevé lorsqu'il tombe dans une partie vierge de motifs de prégravure.

Les tracés en pointillé 54 et 56 du contour du spot correspondent à des étapes d'exploration de la ligne 59 pour lesquelles le spot s'est déporté vers la ligne d'exploration 58. Le signal S(t) présente alors des changements de niveaux illustrés en pointillé. Le niveau remonte dans les parties 62 et 64, parce que le spot recouvre moins les motifs 50 et 52. Par contre, le niveau baisse dans la partie 63 puisque le spot est déporté dans le même sens que le motif 51. En échantillonnant les niveaux 63 et 64 et en retranchant les valeurs échantillonnées, on obtient de façon connue un signal d'erreur de suivi de piste. Les tracés en pointillé 55 et 57 sont relatifs à un spot décentré en sens contraire par rapport à la ligne d'exploration 60, ce qui produit un signal d'erreur de signe inversé, le niveau 63 étant cette fois plus haut que le niveau 64.

Dans une variante de réalisation non représentée sur la figure 1, un seul des motifs 51 et 52 est prévu dans une plage spécifique, l'autre étant prévu dans la plage spécifique qui précède et celle qui suit.

La configuration illustrée sur la figure 1 donne satisfaction lorsque l'écartement des lignes d'exploration 58, 59 et 60 est relativement important par rapport au diamètre du spot de lecture. En effet, le spot est suffisamment fin pour ne pas pouvoir chevaucher deux motifs adjacents 51 ou 52 qui se présentent avec le même écartement que les motifs centrés 50.

Il n'en va plus de même, lorsque la même disposition de motifs déportés est utilisée en resserrant le pas des pistes.

Une disposition de densité une fois et demi supérieure est représentée sur la figure 2. Le diamètre 66 du spot 53 représente par exemple la largeur à mi-hauteur de la loi de répartition 65 de l'intensité lumineuse reçue par la surface du support d'information. Bien que le spot 53 soit encore en mesure de lire les données inscrites le long des motifs 50, son interaction avec les motifs 51 et 52 peut conduire à une détection défectueuse de l'erreur de suivi de piste. Dans la position déportée 56, le spot empiète avec deux motifs 52 et dans la position déportée 55, il empiète avec deux motifs 51. Il en résulte que les niveaux 63 et 64 de la figure 1 ne présentent plus la différenciation requise pour assurer correctement le suivi de piste. Cette perte de lisibilité transverse apparait avant que la diaphotie n'affecte sérieusement la lecture des données avec un spot correctement centré.

Afin d'améliorer la lisibilité transverse dans les plages spécifiques, la présente invention suggère d'apporter un changement dans la répartition des motifs de prégravure qui servent à la mise en évidence des écarts de suivi de piste.

Sur la figure 3, on peut voir une vue en plan d'une disposition de motifs conforme à l'invention. Le pas des pistes et la taille du spot de lecture sont essentiellement les mêmes que ceux de la figure 2, mais la distribution transversale des motifs de prégravure 51 et 52 a cessé d'être régulière.

Le déport des motifs de prégravure 51 et 52 par rapport aux axes de piste a conservé la même valeur absolue que dans les deux figures précédentes, mais l'ordre des signes est permuté d'un élément de piste au suivant.

Lorsqu'on considère l'alignement transversal des motifs 51 ou 52, on constate qu'ils sont séparés par des distances alternativement réduites et accrues. En outre, contrairement aux dispositions des figures 1 et 2, ils présentent une disposition symétrique par rapport à l'axe d'interpiste situé à mi distance des axes de deux éléments de piste voisins.

L'axe d'interpiste est représenté à la figure 4 par la ligne pointillée 73 et l'on a représenté sur cette figure des motifs de prégravure ayant la disposition de la figure 3 dans les régions des rayons 67, 69, 70, 71 et 72. Si l'on admet qu'un déport positif est dirigé vers la périphérie du disque, l'ordre des déports est plus-moins sur la spire commençant à la graduation 0 et se terminant à la graduation 15. Pour la spire débutant à la graduation 15 et finissant à la graduation 30, l'ordre des déports est moins-plus et reprend sa forme antérieure lorsqu'on franchit de nouveau le rayon de référence 67. Dans le cas de blocs de données précédés par une paire de motifs de prégravure 51 et 52 déportés en sens contraire, on peut prévoir un nombre quelconque de blocs de données par révolution, mais pour extraire un signal d'erreur de suivi par échantillonnage des motifs de prégravure 51 et 52, il faut tenir compte de l'inversion d'ordre introduite à chaque franchissement du rayon de référence 67. Rien n'empêche de prévoir plusieurs inversions d'ordre selon plusieurs rayons de référence tels que 67, 69, 70, 71 et 72.

Dans le cas de blocs de données précédés par un seul motif de prégravure dont le déport est alternativement positif ou négatif, chaque révolution ou élément de piste peut comporter un nombre pair ou impair de motifs. Si ce nombre est impair, sans rien changer à l'alternance des déports le long de la piste, on obtient la répartition désirée. Par contre, si ce nombre est pair, il faut permuter les déports une fois au moins par révolution.

Pour avoir une idée de la disposition des motifs dans ce dernier cas, on peut imaginer à la figure 3 que les motifs 51 et 52 sont séparés par un bloc de donnée 50.

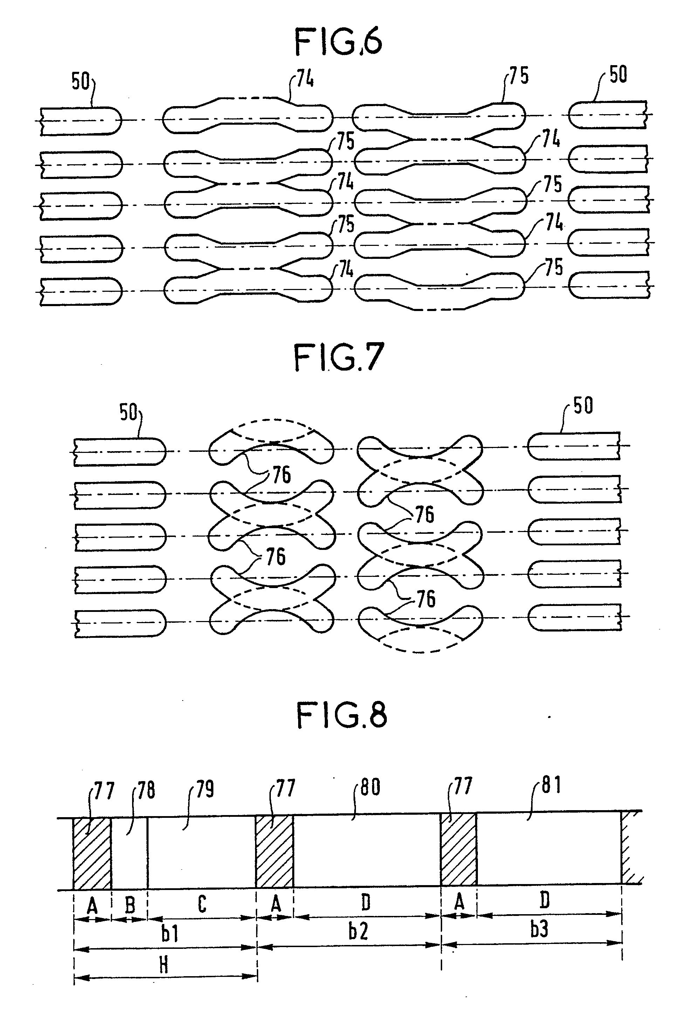

Sur la figure 5, on peut voir un agencement de motifs qui entre également dans le cadre de l'invention. Il s'agit d'un cas limite qui revient à déporter les motifs 51 et 52 suffisamment pour qu'ils se recouvrent complètement dans les zones de rapprochement. La densité des motifs est réduite de moitié, le décalage étant égal à la moitié du pas des pistes. Toute disposition intermédiaire entre celles illustrées sur les figures 4 et 5 peut également convenir.

La réalisation de motif de prégravure met en oeuvre une résine photosensible insolée avec un faisceau lumineux dont le spot créé lors d'un simple passage une image latente donnant naissance à un motif de largeur W constante.

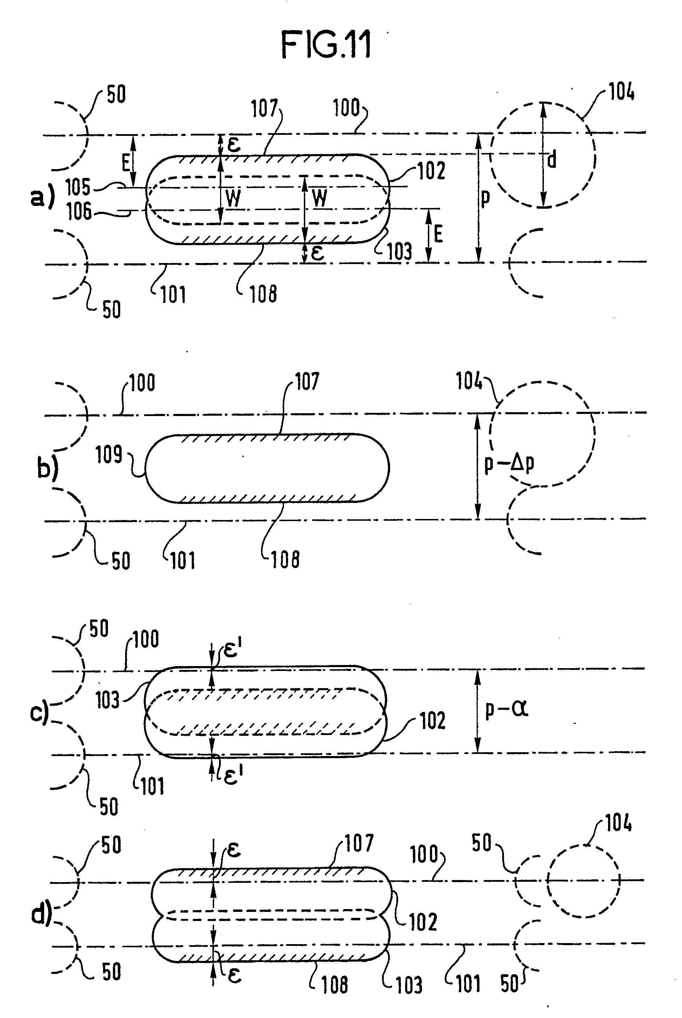

En déplaçant latéralement le spot par rapport à la ligne d'exploration, on réalise un décalage du motif. Cependant, lorsqu'on resserre le pas des éléments de piste et lorsqu'on effectue la permutation d'ordre selon l'invention, le motif de prégravure peut prendre une forme en recouvrement provenant de deux insolations successives. Les illustrations de la figure 11 représentent plusieurs situations susceptibles d'être rencontrées dans la pratique. Le déport d'un motif fait intervenir deux grandeurs qui sont l'écart $\epsilon$ du bord de motif par rapport à la ligne d'exploration et le décalage E de l'axe d'un motif produit par simple insolation par rapport à la ligne d'exploration.

On a représenté en (a) sur la figure 11 deux lignes d'exploration 100 et 101 et un motif résultant d'une insolation à deux reprises affectant des zones oblongues 102 et 103 de largeur W. L'axe 105 de la zone 102 présente un décalage E par rapport à la ligne d'exploration 100 et le même décalage inversé de signe caractérise la position de l'axe 106 de la zone 103 par rapport à la ligne d'exploration 101.

Le bord 107 de la zone 102 présente un écart $\epsilon$ par rapport à la ligne 100 et le même écart inversé caractérise la position du bord 108 de la zone 103 vis à vis de la ligne 101. Si l'on compte comme positifs l'écart $\epsilon$ et le décalage E, le bord 107 et l'axe 106 étant d'un même côté de l'axe 100, on voit que ces grandeurs satisfont la relation algébrique $E - \epsilon = W/2$ où $W/2$ est un nombre positif. Comme le bord 107 peut changer de côté (voir Fig. 11 (d)), le signe de l'écart $\epsilon$ peut s'inverser. Il en résulte qu'un décalage E de valeur nulle est caractérisé par $\epsilon = - W/2$. Cette valeur particulière de l'écart $\epsilon$ est exclue lors de l'écriture des motifs déportés.

Ceci dit, on a représenté en (a) le contour 104 du spot de lecture avec un déport vis à vis de la ligne d'exploration 100. Pour fixer les idées, ce déport positif est par exemple égal à $\epsilon$ ce qui signifie que la moitié du spot interagit avec le motif résultant, seul le bord 107 étant impliqué dans cette interaction.

Donc, le seul paramètre du motif résultant qui ait une incidence sur la détection de l'erreur de suivi est l'écart $\epsilon$ qui doit être différent de la valeur $- W/2$, mais qui peut être positif, négatif ou nul.

Avec le pas p représenté en (a) sur la figure 11, le motif résultant révèle exactement le décalage E à travers l'écart $\epsilon$ qui en découle par la relation: $\epsilon = E - W/2$.

En resserrant le pas p de la valeur $\Delta p$, on voit en (b) le cas particulier où les zones 102 et 103 se recouvrent complètement, ce qui fournit un motif résultant 109 dont l'interaction avec le spot 104 obéit à des paramètres qui n'ont pas subi l'influence de la variation de pas. Néamoins la valeur p- $\Delta$p égale à W + 2$\epsilon$ représente la valeur minimale du pas que l'on peut accepter lors de la réalisation des motifs de prégravure. En effet, comme illustré à la figure 11 en (c) si le pas venait à atteindre une valeur p- $\alpha$ inférieure à W + 2$\epsilon$, le motif résultant prendrait une forme telle que les bords externes ne seraient plus écartés de des lignes d'exploration 100 et 101. Un nouvel écart $\epsilon$ est créé qui dépend de la valeur du pas, ce qui constitue un inconvénient.

Il convient cependant de remarquer que le motif résultant illustré en (c) n'est défectueux que par la façon dont il a été réalisé. Si les zones 102 et 103 qui l'on engendré avaient présenté le nouvel écart (quasi nul) au lieu de l'écart $\epsilon$, on aurait pu se retrouver dans la situation (a) ou (b).

On peut conclure de ce qui précède que la notion de déport dans un motif à recouvrement est surtout liée à l'écart dans les limites de pas où il est reproductible. On constate que les motifs obtenus conformément à l'invention présentent une disposition symétrique par rapport à la médiane des lignes d'exploration 100 et 101. On constate aussi qu'un écart $\epsilon$ nul ne signifie pas un déport nul et que c'est l'écart $\epsilon$ égal à-W/2 qui représente l'absence de déport. On voit en (d) sur la figure 11 un exemple de motif résultant dans lequel l'écart $\epsilon$ est de signe contraire à celui qui figure en (a) et qui autorise un grand resserrement de pas. L'accroissement du pas des éléments de piste peut faire cesser le recouvrement des zones d'insolation 102 et 103, de sorte que le disposition passe de un à deux motifs, mais cela ne perturbe pas l'écart $\epsilon$.

On peut cependant réaliser des motifs de prégravure ayant simultanément au moins une partie déportée et au moins une partie centrée placée à l'extrémité du motif. La présence d'extrémités centrées permet de créer au cours de l'exploration des motifs de prégravure des transitions du signal de lecture qui, par un traitement approprié, sont génératrices d'un signal de synchronisation. Ce signal n'est émis que lors de l'exploration d'un motif de prégravure codé à cet effet, aucune autre entité lisible sur le support d'information n'étant apte à déclencher ce signal.

Sur la figure 6, on peut voir des formes de motifs de prégravure à double usage. Le motif élémentaire apparait en haut à gauche et en bas à droite de la figure 6. Il présente une largeur sensiblement uniforme, mais il est déporté dans son milieu alors que ses extrémités sont centrées sur la ligne d'exploration en trait mixte. Du fait de la mise en oeuvre de la règle d'inversion énoncée ci-dessus, les motifs élémentaires peuvent se souder comme indiqué sur la figure 6, en prenant la forme d'un X.

On retrouve à la figure 7 une forme analogue, mais avec un degré d'interpénétration poussé à l'extrême.

En ce qui concerne la partie en déport, les remarques formulées à propos de la figure 11 conservent toute leur signification. Lors de l'insolation des motifs de prégravure, il faut veiller à ce que le bord concave du profil élémentaire ne soit insolée qu'une seule fois, car sinon, c'est la partie convexe qui deviendrait déterminante pour le profil final du motif.

Du fait des dispositions illustrées par les figures 3, 5, 6 et 7, on voit que les déports positif et négatif se rencontrent dans un ordre déterminé sur un élément de piste et que cet ordre est inversé pour les deux éléments de piste les plus proches. Cette permutation doit se répercuter au niveau du circuit qui détermine l'erreur de suivi de piste.

Il est donc généralement nécessaire de définir sur le support d'information à quelle phase d'exploration correspond la permutation d'ordre.

Dans le cas du support d'information illustré à la figure 4, c'est le rayon 67 qui marque l'enchaînement des éléments de piste.

Sur la figure 8, on a représenté le début d'un secteur comprenant à intervalles réguliers des blocs de données. En explorant de gauche à droite le secteur qui s'étend le long d'un élément de piste sur une fraction de révolution, par exemple 1/32$^{\text{è}}$ de tour, on rencontre à intervalles réguliers des plages spécifiques 77 qui renferment des motifs de prégravure destinés à assurer la synchronisation et le suivi de l'élément de piste. Typiquement, chaque plage 77 a une étendue A de huit fois la dimension de la cellule bit et elle est séparée de sa plus proche voisine par une plage intercalaire pouvant contenir 96 cellules bit. Ainsi, chaque zone $b_1$, $b_2$, $b_3$ forme un groupe de 104 cellules. L'entête H du secteur est constituée par le premier groupe $b_1$ qui comporte une plage 79 réservée à l'adressage des zones de mémoire. La plage 79 contient l'adresse du secteur exprimé par trois mots de 24 bits. La plage intermédiaire 78 peut contenir un signe indicateur de la permutation d'ordre qui intervient par exemple à chaque révolution. Restent alors, les plages 80, 81 et ses suivantes qui son allouées à l'emmagasinage des données. A titre indicatif, l'étendue B peut correspondre à 24 bits, la plage 79 ayant une étendue C de 72 bits; les plages de données ont chacune l'étendue D de 96 bits.

La lecture d'un support d'information tel que décrit ci-dessus nécessite une adaptation des circuits permettant d'astreindre le spot lumineux à suivre les éléments de piste ou à réaliser des sauts de piste.

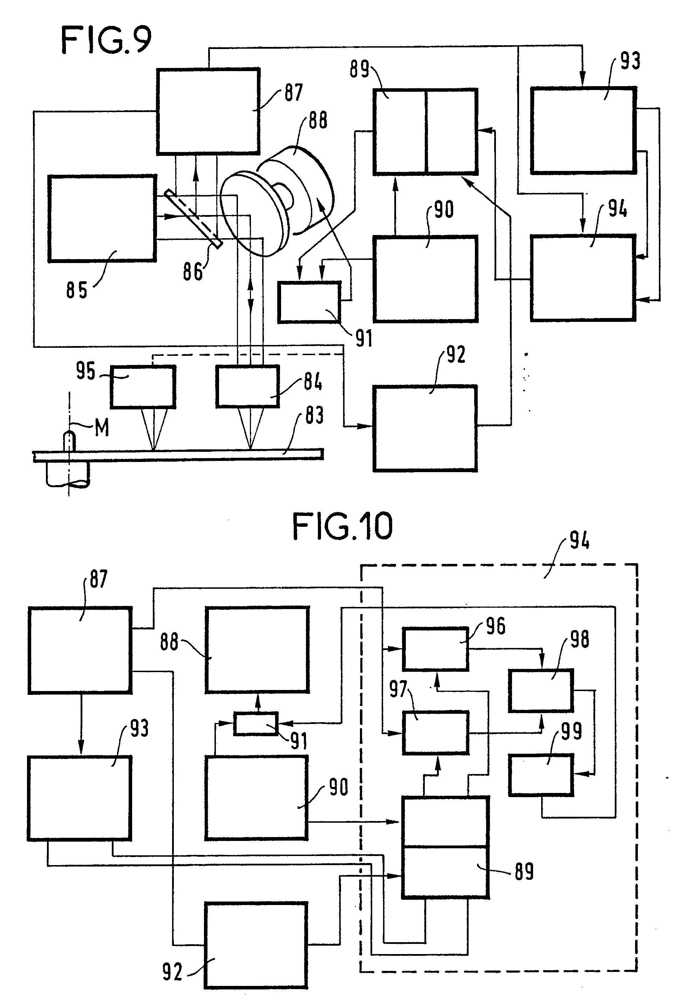

Sur la figure 9, on peut voir un premier exemple de réalisation d'un dispositif de lecture optique selon l'invention.

Le support d'information 83 est porté par une broche rotative d'axe M animée par exemple d'une vitesse angulaire de rotation uniforme. La surface de référence du support d'information 83 est éclairée par une source laser 85 via une lame semitransparente 86, un miroir pivotant et un objectif de focalisation 84. La rotation du miroir pivotant est commandée par un moteur 88, afin de déplacer le spot lumineux formé par l'objectif 84 dans la surface de référence du support 83. Ce déplacement a lieu transversalement par rapport à la ligne d'exploration des éléments de piste. La lumière qui a interagi avec le support d'information est reprise par l'objectif 84 et renvoyée via le miroir pivotant et la lame 86 vers des moyens photodétecteurs 87 qui délivrent un signal électrique de lecture contenant les diverses informations lues successivement le long de chacun des éléments de piste.

Ce signal électrique est appliqué à un circuit générateur de fenêtres d'echantillonnage 93, à un circuit évaluateur 94 du déport du spot par rapport à la ligne d'exploration et si nécessaire à un circuit d'identification 92 de la marque spécifique de la permutation d'ordre. Un circuit de commande 91 actionne le moteur 88 selon deux grandeurs d'entrée qui sont l'erreur de suivi de piste à compenser et l'ampleur du saut de piste à réaliser. Cette dernière grandeur est déterminée par une circuit de commande 90 qui gère les accès selon les demandes d'écriture ou de lecture provenant de l'extérieur et qui peut agir sur un moteur d'accès non représenté sur la figure 9. La grandeur représentant l'erreur de suivi de piste est produite par le circuit 94 sans tenir compte de la permutation d'ordre des motifs de prégravure affectés à cette tâche. Il faut donc modifier en conséquence le signe du signal délivré par le circuit évaluateur 94 et à cet effet l'invention prévoit d'intercaler entre les circuits 91 et 93 un circuit permutateur 89 permettant de rétablir le signe convenable de l'erreur de suivi de piste pour assurer un bon fonctionnement de la boucle d'asservissement qui compense cette erreur. Le circuit permutateur 89 illustré à la figure 9 comporte deux étages montés en cascade pour intervertir les liaisons entre les bornes d'entrée et les bornes de sortie en réponse à deux commandes séparées. L'une de ces commandes est fournie par le circuit 90 lorsqu'on effectue un saut de piste correspondant à un nombre impair de pas. L'autre commande est fournie par le circuit d'identification 92 au cours de l'exploration de la marque de permutation d'ordre présente dans l'une des plages 78 évoquées ci-dessus.

Si un saut de piste coïncide avec la détection de cette marque, les deux étages permutent et le double changement de signe qui en résulte ramène la liaison à sa forme antérieure.

A titre de variante, le support d'information 83 peut être muni d'une piste de référence uniquement composée de motifs de prégravure ayant trait à la synchronisation de son défilement face à la tête de lecture. Il en est ainsi si le support d'information est un disque comportant une couronne concentrique à la plage annulaire contenant les éléments de piste. Cette couronne peut être indexée par une marque spécifique de la permutation d'ordre des motifs de prégravure situés dans la plage annulaire où est emmagasinée l'information. L'exploration optique de cette couronne est confiée à une tête optique auxiliaire 95 qui délivre un signal de lecture caractérisant la rotation du disque. Comme illustré en pointillé à la figure 9, ce signal de lecture est substitué au signal de lecture provenant du circuit de détection 87 et c'est la marque indexant la couronne qui est reconnue par le circuit 92. Dans ce cas, la zone 78 illustrée à la figure 8, peut contenir un signal spécifique annonçant l'exploration de l'adresse du secteur.

Dans le cas de la figure 9, le circuit permutateur 89 est extérieur au circuit 94 qui détermine le signal de déport du spot par la comparaison de deux échantillons du signal de lecture prélevés lors de l'exploration des parties en déport des motifs de prégravure.

On peut également permuter les échantillons à l'entrée du circuit comparateur comme illustré à la figure 10.

Le rectangle référencé 94 comprend le circuit 89 tandis que les éléments extérieurs au rectangle 94 sont les mêmes qu'à la figure 9.

Le circuit évaluateur du déport du spot comporte deux portes analogiques 96 et 97 recevant le signal de lecture délivré par le circuit de détection 97. Chaque porte est commandée par une impulsion d'échantillonnage provenant du circuit générateur 93, mais les deux impulsions sont aiguillées vers les portes 96 et 97 par le circuit 89 de façon que l'échantillon disponible à la sortie de la porte 96 soit systématiquement représentatif de l'interaction du spot avec un motif de prégravure ayant un signe de déport prédéterminé. Comme la situation est la même pour l'autre porte et l'autre signe de déport, on voit que le circuit comparateur 98 fournit une valeur du déport du spot ayant le signe approprié. Cette valeur peut être mémorisée ou lissée par le circuit 99 avant d'être appliquée au circuit de commande 91. La commande du circuit permutateur 89 reste inchangée et il pourrait tout aussi bien être intégré au générateur 93.

Les dispositifs de lecture des figures 9 et 10 peuvent être rendus compatibles pour lire des supports d'information utilisant des motifs de prégravure à agencement monotone. Pour cela, il suffit de maintenir le permutateur 89 dans un même état choisi à l'avance. Le circuit 92 qui détecte la marque signalant la permutation d'ordre peut aisément, avec un circuit temporisateur, reconnaitre quel mode de fonctionnement est à mettre en oeuvre.

L'invention s'applique également à des motifs de prégravure comportant deux déports de signes contraires. Cette version dérive des configurations illustrées aux figures 6 et 7 où les motifs de prégravure glisseraient l'un vers l'autre parallèlement à la ligne d'exploration des éléments de piste jusqu'à fusion de leurs extrémités centrées. Comme deux extrémités sont perdues du fait de la fusion des motifs en X, on peut faire appel aux extrémités des motifs centrés 50 pour définir le code de transitions nécessaire à la synchronisation de l'exploration. On peut également adjoindre en tête ou en queue de la structure à motifs en X fusionnés un motif centré dont les deux extrémités fournissent le complément en vue d'un décodage à quatre transitions.

En ce qui concerne la mise en évidence d'une permutation d'ordre, on peut se passer d'une marque spécifique si l'on se fonde sur la lecture des adresses des éléments de piste. En effet, si deux éléments de piste consécutifs ont pour adresses les nombres n et n + 1, le changement de parité peut servir de moyen pour sélectionner la bonne permutation. Dans ce cas, le circuit 92 des figures 9 et 10 déterminera la parité des addresses d'éléments de piste en signalant le changement de parité lorsqu'il se produit à chaque révolution. On pourrait également se fonder sur les adresses de secteurs en détectant par exemple le passage du dernier secteur au premier et en réalisant la permutation d'ordre à l'instant où le premier secteur est abordé.

**Revendications**

1. Support d'information comportant dans une surface de référence des éléments de piste adjacents (68) matérialisés par des motifs de prégravure, lesdits éléments définissant des lignes d'exploration équidistantes (100, 101) et lesdits motifs définissant des droites orthogonales (67, 69, 70, 71, 72) qui segmentent les éléments de pistes en portions égales et forment des intersections à chacune desquelles est attaché au moins l'un desdits motifs ; lesdits motifs présentant des déports égaux et de signes contraires, alternés d'un motif à l'autre par rapport auxdites lignes d'exploration de manière à former le long de chacune d'elles au moins une suite périodique de motifs alternativement décalés, caractérisé en ce que les motifs alignés orthogonalement (51,52 dans les figures 3 et 5; 74,75 dans la figure 6;76 dans la figure 7) sont symétriques par rapport aux lignes médianes comprises entre deux lignes d'exploration immédiatement adjacentes et sont séparés par des distances alternativement réduites et accrues.

2. Support d'information selon la revendication 1, caractérisé en ce que les motifs alignés orthogonalement présentent un contour symétrique par rapport à ladite ligne médiane.

3. Support d'information selon la revendication 1, caractérisé en ce que deux motifs alternés sont respectivement attachés à deux droites orthogonales consécutives.

4. Support d'information selon la revendication 1, caractérisé en ce que deux motifs alternés sont attachés à chacune desdites droites orthogonales.

5. Support selon l'une quelconque des revendications 1 à 4, caractérisé en ce que les éléments de piste sont concentriques dans une plage annulaire destinée à l'emmagasinage de l'information ; lesdites droites orthogonales passant par le centre (M) de ladite plage.

6. Support selon la revendication 5, caractérisé en ce qu'il comporte en outre une couronne annulaire concentrique de ladite plage.

7. Support selon l'une quelconque des revendications 1 à 6, caractérisé en ce que lesdits déports sont uniformes d'un bout à l'autre desdits motifs (51,52).

8. Support selon l'une quelconque des revendications 1 à 7, caractérisé en ce que lesdits déports sont situés à l'intérieur desdits motifs ; lesdits motifs (74, 75, 76) ayant des terminaisons situées sur lesdites lignes d'exploration.

9. Support selon la revendication 8, caractérisé en ce que lesdits motifs ont une forme en X.

10. Support selon la revendication 8, caractérisé en ce que chaque motif (74,75) comporte deux terminaisons sans déport qui encadrent une portion ayant un déport.

11. Support selon l'une quelconque des revendications 1 à 6, caractérisé en ce que lesdits déports sont constitués par un écart prédéterminé ( $\epsilon$ ) entre le bord d'un motif et la ligne d'exploration qui est la plus proche.

12. Support selon la revendication 9, caractérisé en ce que lesdits motifs ayant au moins une partie centrée, la demi-largeur de cette partie centrée est différente dudit écart prédéterminé ( ε ) lorsqu'il est négatif.

**13.** Support selon la revendication 1, caractérisé en ce que la forme dudit motif découle du balayage de ladite surface avec un spot circulaire.

**14.** Support selon la revendication 1, caractérisé en ce que chaque élément de piste correspond à une révolution complète autour d'un centre et en ce que ladite suite s'étend sur ladite révolution.

**15.** Dispositif de lecture d'un support d'information pour format échantillonné comportant des moyens de détection optique d'un rayonnement de lecture ayant interagi avec ledit support dans la partie de sa surface de référence éclairée par un spot de lecture, des moyens permettant de déplacer ledit spot transversalement par rapport à des éléments de piste adjacents dans ladite surface de référence et des moyens d'asservissement à échantillonnage permettant d'astreindre ledit spot à suivre les lignes d'exploration desdits éléments de piste grâce à l'exploration de motifs de prégravure en forme d'îlôts espacés qui servent à matérialiser lesdits éléments de piste, caractérisé en ce qu'auxdits moyens d'asservissement à échantillonnage sont associés des moyens permutateurs actionnés au moins à chaque saut de piste égal à un nombre impair de pas d'éléments de piste.

**16.** Dispositif selon la revendication 15, caractérisé en ce que les moyens permutateurs comportent deux étages en cascade ; l'un de ces étages commutant au moins une fois lors du passage d'un élément de piste à celui qui le suit, l'autre étage étant commuté par ledit saut de piste.

**17.** Dispositif selon l'une quelconque des revendications 15 et 16, caractérisé en ce que les moyens permutateurs influent sur le signe d'un signal électrique représentant au signe près le déport du spot de lecture par rapport à l'une quelconque desdites lignes d'exploration suivie par ce spot.

**18.** Dispositif selon l'une quelconque des revendications 15 et 16, caractérisé en ce que les moyens permutateurs sont intercalés dans deux voies qui transmettent des signaux impulsionnels destinés à la commande séquentielle de moyens échantillonneurs qui reçoivent le signal électrique produit par les moyens de détection optique.

**19.** Dispositif selon la revendication 16, caractérisé en ce que ledit support d'information comporte une information spécifique marquant l'accès à une suite périodique de motifs de prégravure présentant par rapport à une autre suite périodique qui la précède une permutation d'ordre portant sur le signe des déports desdits motifs par rapport auxdites lignes d'exploration ; ledit dispositif comportant des moyens identificateurs de ladite information spécifique dans un signal provenant de la lecture dudit support d'information ; le signal de présence délivré par lesdits moyens identificateurs servant à commander la commutation de l'un desdits étages en cascade.

**20.** Dispositif selon la revendication 19, caractérisé en ce que ledit support d'information est un disque ayant un centre de rotation et en ce que l'une au moins desdites suites s'étend sur une révolution complète dudit disque.

**21.** Dispositif selon la revendication 20, caractérisé en ce que lesdits motifs de prégravure sont situés dans une plage annulaire d'emmagasinage de l'information et en ce que ladite information spécifique est une information de prégravure située dans une couronne concentrique de ladite plage annulaire.

**22.** Dispositif selon la revendication 19, caractérisé en ce que pour lire un support d'information ne comportant pas ladite permutation d'ordre, les moyens permutateurs sont maintenus dans un état de commutation prédéterminé par des moyens qui réagissent à l'absence de ladite information spécifique.

**Claims**

**1.** An information carrier comprising on a reference surface adjacent track elements (68) constituted by pre-engraved patterns, said elements defining equidistant exploration lines (100, 101) and said patterns defining orthogonal straight lines (67, 69, 70, 71, 72) which divide the track elements into equal portions and define intersections to each of which at least one of said patterns is attached, said patterns presenting identical shifts of opposite signs which alternate from one pattern to the other with respect to said exploration lines such that along each of these lines, at least one periodic sequence of alternatively shifted patterns is constituted, characterized in that said orthogonally aligned patterns (51, 52 in Figures 3 and 5; 74, 75 in Figure 6; 76 in Figure 7) are disposed symmetrically with respect to median lines included between two immediately adjacent exploration lines, and are separated by alternately reduced and increased distances.

2. An information carrier according to claim 1, characterized in that the orthogonally aligned patterns present a symmetrical outline with respect to said median line.

3. An information carrier according to claim 1, characterized in that two alternated patterns are respectively attached to two consecutive orthogonal straight lines.

4. An information carrier according to claim 1, characterized in that two alternated patterns are attached to each one of said orthogonal straight lines.

5. An information carrier according to any one of claims 1 to 4, characterized in that the track elements are concentric elements in an annular zone intended to the storage of information, said orthogonal straight lines passing through the center (M) of said zone.

6. An information carrier according to claim 5, characterized in that it further comprises an annular ring concentrical to said zone.

7. An information carrier according to any one of claims 1 to 6, characterized in that said shifts are uniform from one end of said patterns (51, 52) to the other.

8. An information carrier according to any one of claims 1 to 7, characterized in that said shifts are located inside said patterns, said patterns (74, 75, 76) having end portions which are situated on said exploration lines.

9. An information carrier according to claim 8, characterized in that said patterns are X-shaped.

10. An information carrier according to claim 8, characterized in that each pattern (74, 75) comprises two end portions without shift which encompass a portion having a shift.

11. An information carrier according to any one of claims 1 to 6, characterized in that said shifts are constituted by a predetermined offset ($\epsilon$) between the border of one pattern and the closest exploration line.

12. An information carrier according to claim 9, characterized in that, said patterns having at least one centered portion, the half-width of this centered portion differs from said predetermined offset ($\epsilon$) when the latter is negative.

13. An information carrier according to claim 1, characterized in that the shape of said pattern is derived from the scanning of said surface with a circular spot.

14. An information carrier according to claim 1, characterized in that each track element corresponds to one complete turn about a center and that said sequence extends over said turn.

15. A device for reading an information carrier for a sampled format, comprising means for the optical detection of a read radiation which has interacted with said carrier in the reference surface portion receiving a read-out light spot, means allowing to displace said spot transversally with respect to adjacent track elements in said reference surface and adjustment means of the sampled type allowing to oblige said spot to follow the exploration lines of that track elements due to the exploration of pre-engraved patterns constituted by individual islands which are used to constitute said track elements, characterized in that permutation means are associated to said adjustment means of the sampled type, said permutation means being enabled at least at each track jump equal to an odd number of track element steps.

16. A device according to claim 15, characterized in that said permutation means comprise two cascade-linked stages, one of which switches at least once during transition from one track element to the next one, while the other is switched by said track jump.

17. A device according to any one of claims 15 and 16, characterized in that the permutation means influence the sign of an electric signal representing, besides the sign, the shift of the read-out spot with respect to any one of said exploration lines scanned by said spot.

18. A device according to any one of claims 15 and 16, characterized in that the permutation means are inserted into two channels which transmit pulse signals intended to sequentially control the means of the sampled type which receive the electric signal produced by the optical detection means.

19. A device according to claim 16, characterized in that said information carrier comprises a specific information which marks the acces to a periodic sequence of pre-engraved patterns presenting, with respect to another periodic sequence which precedes it, a permutation of the order applied to the sign of the shifts of said patterns with respect to said exploration lines, said device comprising means for identifying said specific information in a signal read from said information carrier, the signal signifying the presence of said specific information and delivered by said identifying means being used to control the switching of one of said cascade-linked stages.

20. A device according to claim 19, characterized in that said information carrier is a disk which has a center of rotation, and that one at least of said sequences extends over a complete turn of said disk.

21. A device according to claim 20, characterized in that said pre-engraved patterns are situated in an annular information storage zone and that said specific information is a pre-engraved information situated in a ring which is concentric to said annular zone.

22. A device according to claim 19, characterized in that in order to read out data from an information carrier which does not comprise said permutation of the order, the permutation means are maintained in a predetermined switching state by means which react on the absence of said specific information.

**Ansprüche**

1. Informationsträger, der auf einer Bezugsoberfläche nebeneinanderliegende von Vorgravurmotiven gebildete Spurelemente (68) besitzt, wobei die Elemente Abtastzeilen (100, 101) gleichen Abstands definieren und die Motive orthogonale Gerade (67, 69, 70, 71) definieren, die die Spurelemente in gleich große Abschnitte unterteilen und Schnittpunkte bilden, an denen jeweils mindestens eines der Motive angebunden ist, wobei die Motive von einem zum nächsten alternierende Versetzungen gleicher Größe und entgegengesetzten Vorzeichens bezüglich der Abtastzeilen besitzen, so daß sie entlang jeder der Zeilen mindestens eine periodische Folge von abwechselnd versetzten Motiven bilden, dadurch gekennzeichnet, daß die orthogonal fluchtenden Motive (51, 52 in den Figuren 3 und 5; 74, 75 in Fig 6; 76 in Fig. 7) symmetrisch bezüglich der zwischen zwei unmittelbar benachbarten Abtastungszeilen liegenden Mittellinien und durch abwechselnd verkleinerte und vergrößerte Abstände voneinander getrennt sind.

2. Informationsträger nach Anspruch 1, dadurch gekennzeichnet, daß die orthogonal fluchtenden Motive einen symmetrischen Umriß bezüglich dieser Mittellinie besitzen.

3. Informationträger nach Anspruch 1, dadurch gekennzeichnet, daß zwei Motive mit abwechselnd vergrößertem und verkleinertem Abstand an je eine von zwei aufeinanderfolgenden orthogonalen Geraden angebunden sind.

4. Informationsträger nach Anspruch 1, dadurch gekennzeichnet, daß zwei Motive mit abwechselnd vergößertem und verkleinertem Abstand an jede der orthogonalen Geraden angebunden sind.

5. Informationsträger nach einem beliebigen der Ansprüche 1 bis 4, dadurch gekennzeichnet, daß die Spurelemente in einem für die Informationsspeicherung bestimmten Ringbereich konzentrisch angeordnet sind und die orthogonalen Geraden durch das Zentrum (M) dieses Bereichs verlaufen.

6. Informationsträger nach Anspruch 5, dadurch gekennzeichnet, daß er außerdem einen zu diesem Bereich konzentrischen Ring aufweist.

7. Informationsträger nach einem beliebigen der Ansprüche 1 bis 6, dadurch gekennzeichnet, daß die Versetzungen gleichförmig von einem Ende zum anderen der Motive (51, 52) sind.

8. Informationsträger nach einem beliebigen der Ansprüche 1 bis 7, dadurch gekennzeichnet, daß die Versetzungen sich im Inneren der Motive befinden, wobei die Motive (74, 75, 76) auf den Abtastzeilen liegende Enden besitzen.

9. Informationsträger nach Anspruch 8, dadurch gekennzeichnet, daß die Motive die Form des Buchstaben X aufweisen.

10. Informationsträger nach Anspruch 8, dadurch gekennzeichnet, daß jedes Motiv (74, 75) zwei Enden ohne Versetzung besitzt, die einen Abschnitt mit einer Versetzung einrahmen.

11. Informationsträger nach einem beliebigen der Ansprüche 1 bis 6, dadurch gekennzeichnet, daß die Versetzungen durch einen vorgegebenen Abstand ($\epsilon$) zwischen dem Rand eines Motivs und der nächstliegenden Abtastzeile gebildet werden.

12. Informationsträger nach Anspruch 9, dadurch gekennzeichnet, daß die Motive zumindest einen zentrierten Bereich aufweisen und die halbe Breite dieses zentrierten Bereichs sich von dem vorgegebenen Abstand ($\epsilon$) unterscheidet, wenn dieser negativ ist.

13. Informationsträger nach Anspruch 1, dadurch gekennzeichnet, daß die Form des Motivs sich aus der Abtastung der Oberfläche mit einer kreisförmigen Abtastpunkt ergibt.

14. Informationsträger nach Anspruch 1, dadurch gekennzeichnet, daß jedes Spurelement einer vollen Umdrehung um ein Zentrum entspricht und daß die Folge sich über diese Umdrehung erstreckt.

15. Vorrichtung zum Auslesen eines Informationsträger für ein getastetes Format, mit Mitteln zur optischen Erfassung einer Lesestrahlung, die mit dem Informationsträger in dem Bereich der Bezugsoberfläche interragiert hat, der von einem Leselichtpunkt beleuchtet wird, mit Mitteln, die eine Verschiebung des Lichtpunkts quer zu benachbarten Spurelementen auf der Bezugsoberfläche erlauben, und mit getasteten Nachführungsmitteln, die es erlauben, den Lichtpnkt zu zwingen, die Abtastzeilen der Spurelemente zu verfolgen, und zwar aufgrund der Abtastung von Vorgravurmotiven in Form von in Abständen angeordneten Inseln, die der Materialisierung der Spurelemente dienen, dadurch gekennzeichnet, daß den Mitteln zur getasteten Nachführung Permutationsmittel zugeordnet sind, die mindestens bei jedem Spursprung gleich einer ungeraden Anzahl von Schritten von Spurelementen betätigt werden.

16. Vorrichtung nach Anspruch 15, dadurch gekennzeichnet, daß die Permutationsmittel zwei Stufen in Kaskade aufweisen, von denen die eine mindestens einmal beim Übergang von einem Spurelement zum nächstfolgenden und die andere durch den Spursprung geschaltet wird.

17. Vorrichtung nach einem beliebigen der Ansprüche 15 und 16, dadurch gekennzeichnet, daß die Permutationsmittel das Vorzeichen eines elektrischen Signals beeinflussen, das abgesehen vom Vorzeichen die Versetzung des Lesepunkts bezüglich einer beliebigen der von diesem Lesepunkt verfolgten Abtastzeile darstellt.

18. Vorrichtung nach einem beliebigen der Ansprüche 15 und 16, dadurch gekennzeichnet, daß die Permutationsmittel in zwei Kanäle eingefügt sind, die Impulssignale übertragen, welche zur sequentiellen Steuerung der getasteten Nachführmittel bestimmt sind, welche das von den optischen Erfassungsmitteln erzeugte Signal empfangen.

19. Vorrichtung nach Anspruch 16, dadurch gekennzeichnet, daß der Informationsträger eine spezifische Information trägt, die den Zugang zu einer periodischen Folge von Vorgravurelementen markiert, welche bezüglich einer anderen, vorhergehenden periodischen Folge eine das Vorzeichen der Versetzungen der Motive bezüglich der Abtastzeilen betreffende Vertauschung der Reihenfolge darstellt, daß die Vorrichtung Mittel zur Identifizierung der spezifischen Information in einem beim Auslesen des Informationsträgers entstehenden Signal besitzt und daß das Signal, mit dem die Identifiziermittel das Vorliegen der spezifischen Information anzeigen, zur Steuerung der Umschaltung einer der Kaskadenstufen dient.

20. Vorrichtung nach Anspruch 19, dadurch gekennzeichnet, daß der Informationsträger eine Scheibe mit einem Drehmittelpunkt ist und daß mindestens eine der Folgen sich über eine vollständige Umdrehung der Scheibe erstreckt.

21. Vorrichtung nach Anspruch 20, dadurch gekennzeichnet, daß die Vorgravurmotive in einem ringförmigen Informationsspeicherbereich liegen und daß die spezifische Information eine Vorgravurinformation ist, die in einem zum ringförmigen Bereich konzentrischen Ring liegt.

22. Vorrichtung nach Anspruch 19, dadurch gekennzeichnet, daß zum Auslesen eines Informationsträgers, der die Vertauschung der Reihenfolge nicht aufweist, die Permutationsmittel in einem bestimmten Schaltzustand durch Mittel gehalten werden, die auf die Abwesenheit der spezifischen Information reagieren.

# FIG.1

# FIG.2

# FIG.3

# FIG.4

# FIG.5

## FIG.6

## FIG.7

## FIG.8

FIG.9

FIG.10

# FIG.11